# EUROPÄISCHE PATENTSCHRIFT

(11) **EP 1 181 087 B1**
(45) Veröffentlichungstag und Bekanntmachung des Hinweises auf die Patenterteilung: **14.05.2003**
(21) Anmeldenummer: 00909152.1
(22) Anmeldetag: 08.02.2000
(51) Int. Cl.: B01D 53/22, H02B 13/055

(54) **SF6-ABTRENNUNG AUS ISOLIERGASEN AUS GASISOLIERTEN LEITUNGEN**
ISOLATION OF SF6 FROM INSULATING GASES IN GAS-INSULATED LINES
SEPARATION DE SF6 CONTENU DANS DES GAZ ISOLANTS PROVENANT DE LIGNES A ISOLATION GAZEUSE

(30) Priorität: 20.05.1999 DE 19923155
(43) Veröffentlichungstag der Anmeldung: 27.02.2002
(73) Patentinhaber: Solvay Fluor und Derivate GmbH, 30173 Hannover (DE)
(72) Erfinder: PITTROFF, Michael, D-30161 Hannover (DE); SCHWARZE, Thomas, D-30173 Hannover (DE); BELT, Heinz-Joachim, D-30936 Burgwedel (DE)
(74) Vertreter: Gosmann, Martin, Dr.
(86) Internationale Anmeldenummer: EP0000979
(87) Internationale Veröffentlichungsnummer: WO00071232

(56) Entgegenhaltungen:
- EP-A- 0 754 487
- EP-A- 0 853 970
- EP-A- 0 885 841
- US-A- 4 838 904
- US-A- 5 843 208

## Beschreibung

Die Erfindung bezieht sich auf ein Verfahren zur Auftrennung von Gemischen, die Schwefelhexafluorid (SF₆) und Stickstoff (N₂) enthalten und aus gasisolierten Leitungen ("GIL") stammen.

Gemische aus Schwefelhexafluorid und Stickstoff werden als isolierendes Füllgas für Erdkabel verwendet, siehe deutsches Gebrauchsmuster 297 20 507.2. Üblicherweise enthalten diese Gemische 5 bis 50 Vol.-% Schwefelhexafluorid, Rest auf 100 Vol.-% Stickstoff.

Im Rahmen der Wartung der Leitungen bzw. bei Störfällen, ist eine Trennung des Gasgemisches insbesondere mit dem Ziel der Wiederverwendung des SF₆ wünschenswert. Das so gewonnene SF₆ nimmt dann ein sehr kleines Volumen ein (Vorteil beim Transport, Auslegung von Leitungsquerschnitten etc.).

EP 0 853 970 und EP 0 754 487 beschreiben ein Verfahren zur Trennung von Gasgemischen, die bei der Halbleiterherstellung anfallen. Derartige Gasgemische können Perfluorverbindungen enthalten. Die Trennung der Gasgemische erfolgt an Membranen. US 5,843,208 beschreibt ein Verfahren zur Rückgewinnung von SF₆ aus Gasgemischen unter Verwendung von Membranen bei einem Druck von max. 6,2 bar.

Aufgabe der vorliegenden Erfindung ist es, ein Verfahren zur Auftrennung der o. a. Gasgemische anzugeben, welches die Isolierung des SF₆ aus den Gemischen zum Zweck der Wiedereinleitung in die gasisolierte Leitung oder zur Wiederverwendung im Rahmen eines geschlossenen Produktkreislaufs ermöglicht.

Eine weitere Aufgabe besteht in der Zurverfügungstellung einer geeigneten Vorrichtung.

Das erfindungsgemäße Verfahren sieht vor, daß man SF₆/N₂-Gemische aus gasisolierten Leitungen mittels Membranen trennt, welche Schwefelhexafluorid abzutrennen vermögen. Das erfindungsgemäße Verfahren kann beispielsweise während der Wartung von gasisolierten Hochspannungsleitungen durchgeführt werden, bei Störfällen oder wenn es sich erwiesen hat, daß das Gas in der Leitung einer Regenerierung bedarf. Das abgetrennte Schwefelhexafluorid kann in die gasisolierte Leitung zurückgeführt werden. Je nach gewünschter Konzentration wird dann auch Stickstoff in die Leitung eingebracht. Eine andere Möglichkeit der Anwendung besteht darin, die in der gasisolierten Leitung befindlichen Gemische aus SF₆ und N₂ (sowie gegebenenfalls weiteren Verunreinigungen) im erfindungsgemäßen Verfahren entsprechend aufzuarbeiten, wenn die Benutzung der gasisolierten Leitung beendet wird und diese verschrottet werden soll. Das SF₆ kann aus den Gemischen isoliert und einem Wiederverwertung zugeführt werden.

Der Gehalt an SF₆ liegt im Bereich von 5 bis 50 Vol.-%. Das erfindungsgemäße Verfahren kann aber auch noch zur Auftrennung von Gasgemischen mit einem höheren SF₆-Gehalt angewendet werden.

Bevorzugt sind organische, asymmetrische Membranen. Bekanntermaßen gibt es gummielastische Membranen ("Rubbery-Membranes") die auf der Basis der Löslichkeit des Permeats trennen. Andere Membranen trennen aufgrund der Diffusionsfähigkeit des Permeats; dies sind nicht-gummielastische, eher kristalline Membranen ("Glassy Membranes"); diese letzteren Membranen sind bevorzugt.

Die Membran kann in bekannter Weise aufgebaut sein, beispielsweise als Bündel von Hohlfasermembranen. Die Membran kann aus bekannten Materialien hergestellt sein. Sehr gut geeignet sind beispielsweise Polyimide, Polycarbonate, Polyester, Polyestercarbonate, Polysulfone, Polyethersulfone, Polyamide, Polyphenylenoxide und Polyolefine. Bevorzugt enthält das Polymermaterial Polyester, Polycarbonate und Polyestercarbonate. Hervorragend geeignet sind Polycarbonate, die von einem Bisphenol abgeleitet werden, in welchem mindestens 25 % der Bisphenoleinheiten in der Polymerkette tetrahalogeniert sind, wobei das Halogen Chlor oder Brom ist. Besonders bevorzugte Membranen weisen eine polymere Matrix auf, die zwei poröse Oberflächen aufweist und eine Schicht, die die Trennung des Schwefelhexafluorids von den anderen Gasbestandteilen ermöglicht. Derartige Membranen werden im US-Patent 4,838,904 (EP-A-0 340 262) beschrieben. Sofern im Gasgemisch noch zusätzliche Verunreinigungen wie SO₂F₂, SO₂ etc. enthalten sind, kann vorab eine Reinigung erfolgen, wie Waschen mit Wasser oder Lauge oder mit Adsorbern. Jede Membranstufe kann aus mehreren Membrankartuschen (parallel angeordnet) bestehen.

Der Druck auf der Eingangsseite der Membran bzw. der Membranen liegt üblicherweise höher als der Umgebungsdruck. Beispielsweise kann man das zu trennende Gasgemisch mit einem Druck von bis zu 13 bar aufgeben. Vorzugsweise liegt der Eingangsdruck bei 10 bis 12 bar. Sofern man mehrere Membranen vorsieht, kann vor jeder Membran ein Kompressor angeordnet sein. Die Temperatur liegt vorteilhaft bei 10 bis 40 °C.

Sofern man zwei Membrantrennstufen vorsieht, sieht man zweckmäßig folgende Führung der Gasströme vor: das zu trennende Gemisch - beispielsweise ein Gemisch von Schwefelhexafluorid und Stickstoff mit 20 Vol.-% SF₆ aus gasisolierten Hochspannungsleitungen - wird auf die erste Membran aufgegeben. Da die Membran Stickstoff bevorzugt passieren läßt, wird ein Permeat mit hohem Stickstoffanteil und niedrigem Schwefelhexafluoridanteil erhalten. Das Permeat wird in die Umwelt entlassen. Das Retentat der ersten Membran - mit einer bereits hohen SF₆-Konzentration - wird in eine weitere Membran eingeleitet. Das aus dieser zweiten Membran resultierende Permeat wird in den Feedstrom der ersten Membran eingeleitet. Das Retentat aus der zweiten Membran stellt Schwefelhexafluorid mit geringen Mengen Stickstoff dar. Es kann nach Verflüssigung mit einem Kompressor sofort in die gasisolierte Hochspannungsleitung rückgeführt oder zwischengespeichert und anderweitig wiederverwendet werden.

Die Anzahl und die Anordnung der Membrankartuschen richtet sich nach dem gewünschten Reinheitsgrad und danach, ob ein Gas mit hohem oder niedrigem SF₆-Gehalt behandelt werden soll. Bei Anwendung dreier Membranstufen ist der Trenneffekt noch besser. Bevorzugt werden die drei Membranen folgendermaßen geschaltet: das SF₆/N₂-Gasgemisch wird auf die 1. Membranstufe als Feedstrom aufgegeben. Das Retentat wird als Feedstrom auf eine 2. Membranstufe aufgegeben. Das Retentat dieser 2. Stufe ist hochangereichertes SF₆ und wiederverwertbar. Das Permeat der 1. Membranstufe wird als Feedstrom auf die 3. Membranstufe aufgegeben. Das Permeat dieser 3. Stufe ist N₂, fast frei von SF₆ und wird in die Umgebung entlassen. Das Permeat der 2. Membranstufe und das Retentat der 3. Membranstufe wird in den Feedstrom zur 1. Membranstufe eingeleitet.

Es wurde festgestellt, daß bereits ein oder zwei Membrantrennstufen ausreichen, damit ein ausreichend angereichertes, gereinigtes Schwefelhexafluorid sowie ein Stickstoffgas mit akzeptabel geringen Mengen an Schwefelhexafluorid erhalten werden können. Eine nachgeschaltete Adsorptionsstufe ist nicht vorgesehen.

Das erfindungsgemäße Verfahren zeichnet sich durch gute Aufspaltung des SF₆/N₂-Gemisches aus Erdkabeln aus. Der gereinigte Stickstoff bzw. die gereinigte Luft kann unbedenklich in die Umwelt entlassen werden. Die Emission von SF₆ in die Umwelt wird stark vermindert. Das rückgewonnene Schwefelhexafluorid kann sofort wieder in die gasisolierte Hochspannungsleitung eingeleitet werden. Man kann aber auch noch weitere Operationen vornehmen, z. B. Stickstoff beimischen, um die gewünschte Gasmischung zu erhalten.

Zur Erfindung gehört auch ein System umfassend eine gasisolierte, mit SF₆/N₂ gefüllte gasisolierte Hochspannungsleitung, eine Membrantrennanlage und Verbindungsleitungen zwischen der gasisolierten Hochspannungsleitung und der Membrantrennanlage. Die Membrantrennanlage umfaßt eine, zwei, drei oder mehr Membrantrennstufen mit für Stickstoff bevorzugt durchlässigen Membranen. In bezug auf die Zahl der Membranstufen gilt das oben Gesagte. Vor der 1. Membranstufe und vorzugsweise jeder weiteren ist ein Kompressor angeordnet. Eine bevorzugte Anlage weist mindestens zwei Membrantrennstufen auf. Sie umfaßt weiterhin eine Verbindungsleitung für das aufzutrennende Gasgemisch, die mit der gasisolierten Hochspannungsleitung und dem Eingang in die erste Membrantrennstufe verbunden ist, eine Verbindungsleitung zwischen erster und zweiter Membrantrennstufe, die zur Einleitung des Retentats (mit SF₆ angereichert) aus der ersten Membrantrennstufe in die zweite Membrantrennstufe vorgesehen ist, eine Abnahmeleitung für das Retentat aus der zweiten Membrantrennstufe, von welcher Retentat mit hohem SF₆-Gehalt abgenommen werden kann. Diese Abnahmeleitung verbindet die Membrantrennanlage mit der gasisolierten Hochspannungsleitung (Verbindungsleitung zur Rückführung des SF₆) oder einem Tank zur Zwischenlagerung. Weiterhin weist sie eine Rückführungsleitung zur Einspeisung des Permeats der 2. Membranstufe in den Feedstrom der 1. Membranstufe auf. Zwischen gasisolierter Leitung und Membrantrennanlage sind Pumpen (z. B. Vakuumpumpen) und Kompressoren zur Entnahme und Einspeisung des Gasgemisches bzw. SF₆ vorgesehen. Gewünschtenfalls können weitere Behandlungseinrichtungen zwischengeschaltet sein (Kompressor, Gasmischer zur N₂-Beimischung etc.) . Das Permeat der 1. Membranstufe kann in die Umgebung abgelassen werden.

Ein weiteres, besonders bevorzugtes System umfaßt drei Membranstufen. Zweckmäßig sind sie wie weiter oben beschrieben geschaltet. Behälter B (symbolisiert die gasisolierte Leitung) weist ein Gemisch von N₂ und SF₆ auf. Durch die Leitung 1 wird das Gemisch in die 1. Membranstufe 2 geleitet. Das Retentat wird über Leitung 3 in die 2. Membranstufe 4 eingespeist. Das Retentat, hochangereichertes SF₆, der Membranstufe 4 wird über Leitung 5 in den Vorratsbehälter V (Zwischentank) eingeleitet. Das Permeat der 1. Membranstufe 2 wird in eine 3. Membranstufe eingespeist, deren Permeat in die Umwelt entlassen werden kann (über Leitung 10) und dem Retentat über die Leitung 7 in den Feedstrom der 1. Membranstufe 2 eingeleitet wird. Auch das Permeat der 2. Membranstufe 4 wird, über Leitung 9, in den Feedstrom der 1. Membranstufe 2 eingeleitet. Kompressoren vor den Membranstufen, Sonden zur Probenanalytik, Durchflußmesser etc. sind der Übersichtlichkeit halber weggelassen. Die Zahlen dienen zur Erläuterung des Beispiels 2. Sie geben das Volumenverhältnis N₂/SF₆ in der jeweiligen Leitung an.

Die Erfindung ermöglicht auf einfache Weise die Wiederverwertung des SF₆-Gehaltes an gasisolierten Leitungen.

Die folgenden Beispiele sollen die Erfindung weiter erläutern, ohne Sie in ihrem Umfang einzuschränken.

Die verwendeten Membranen waren vom Hohlfasertyp, Hersteller: Aga-Gas, Typ Nitroprime™ ; 3 Kartuschen pro Membrantrennstufe.

### Beispiel 1:

### Zweistufen-Verfahren

Durch Vermischen von Stickstoff und Schwefelhexafluorid wurde ein Gasgemisch mit 20 Vol.-% SF₆ und 80 Vol.-% N₂ erzeugt, die einem in Erdkabeln verwendeten Gasgemisch entspricht. Das Gasgemisch, auf einen Druck von 13 bar (abs.) gebracht, wurde aus einem Behälter B, der der gasisolierten Leitung entspricht, über die Leitung 1 in die erste Membrantrennstufe 2 eingeleitet (1 m³/h). Das die erste Membrantrennstufe verlassende Permeat enthielt 97 Vol.-% Stickstoff und 3 Vol.-% Schwefelhexafluorid.

Das Retentat der ersten Membrantrennstufe enthielt 50 Vol.-% Stickstoff und 50 Vol.-% Schwefelhexafluorid und wurde nach erneuter Verdichtung auf 13 bar über die Leitung 3 in die zweite Membrantrennstufe 4 eingeleitet. Das Permeat aus der zweiten Membrantrennstufe enthielt 81 Vol.-% Stickstoff und 19 Vol.-% Schwefelhexafluorid. Das Retentat der zweiten Membrantrennstufe enthielt 95 Vol.-% Schwefelhexafluorid und 5 Vol.-% Stickstoff. Es wurde über die Leitung 5 in einen Vorratsbehälter V eingeleitet. Dieses Produkt ist so rein, daß es unmittelbar zur Wiederverwendung des SF₆ verwendet werden kann.

### Beispiel 2:

### Verfahren mit drei Membranen

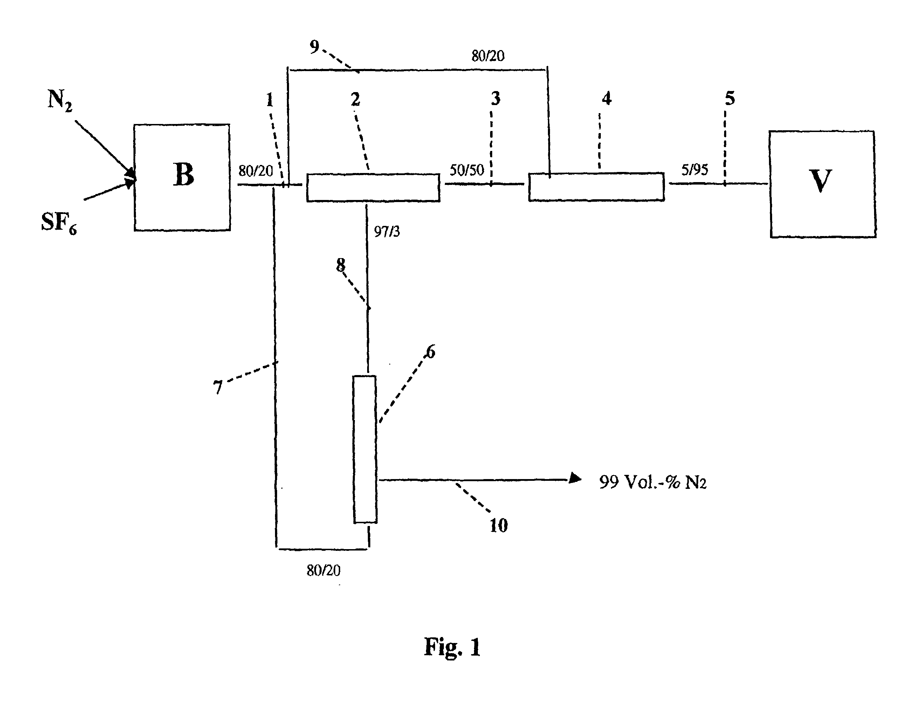

Beispiel 1 wurde wiederholt, diesmal mit 3 Membranen, entsprechend Fig. 1.

Das zu behandelnde Gasgemisch wurde auf die 1. Membranstufe aufgegeben, deren Retentat auf die 2. Membranstufe aufgegeben wurde; deren Retentat war hochangereichertes SF₆ (95 Vol.-%, Rest N₂) und zur Wiederverwertung brauchbar.

Das Permeat der 3. Membranstufe enthielt nur noch 1. Vol.-% SF₆. Das Retentat wurde dem Feedstrom zur 1. Membranstufe beigemischt (über Leitung 7).

## Patentansprüche

1. Verfahren zur Auftrennung von SF₆/N₂-Gemischen unter Verwendung von zur Abtrennung von SF₆ geeigneten Membranen, **dadurch gekennzeichnet, daß** in einer mobilen Membrantrenneinrichtung, deren Membrane aus einer Polymermatrix auf Basis von Polycarbonat, welches von einem Bisphenol, in welchem mindestens 25 % der Bisphenol-Einheiten in der Polymerkette mit Chlor oder Brom tetrahalogeniert sind, bestehen, SF₆/N₂-Gemische aus gasisolierten Leitungen mit einem SF₆-Gehalt von 5 bis 50 Vol.-% bei einem Membraneingangsdruck von 10 bis 13 bar, getrennt werden.

2. Verfahren nach Anspruch 1, **dadurch gekennzeichnet, daß** man zwei oder mehr Membrantrennstufen vorsieht.

3. Verfahren nach Anspruch 1, **dadurch gekennzeichnet, daß** man drei Membrantrennstufen vorsieht, das Retentat der ersten Membrantrennstufe der zweiten Membrantrennstufe zuführt, um aus der zweiten Membrantrennstufe als Retentat ein Gemisch mit hohem SF₆-Gehalt zu gewinnen und man das Permeat der ersten Membranstufe in die 3. Membranstufe einleitet und das Permeat der 2. Membrantrennstufe und das Retentat der 3. Stufe in den Feedstrom der 1. Membranstufe rückgeführt wird und das Permeat der 3. Stufe in die Umwelt entlassen werden kann.

4. Verfahren nach Anspruch 1, **dadurch gekennzeichnet, daß** man das Verfahren während des Gebrauchs der gasisolierten Leitung zur Reinigung des Isoliergasgemisches aus SF₆ und N₂ anwendet oder nach beendetem Gebrauch der gasisolierten Leitung zum Zwecke der Wiederverwertung.

5. System umfassend eine gasisolierte Leitung, eine Membrantrenneinrichtung und eine oder mehrere Verbindungsleitungen zwischen der gasisolierten Leitung und der Membran trenneinrichtung, verwendbar als mobile Membrantrenneinrichtung.

## Claims

1. Process for separating SF₆/N₂ mixtures using membranes suitable for separating off SF₆, **characterised in that** SF₆/N₂ mixtures from gas-insulated lines, having an SF₆ content of from 5 to 50% by volume, are separated at a membrane inlet pressure of 10 to 13 bar in a mobile membrane separation device, the membrane of which consists of a polymer matrix based on polycarbonate that is derived from a bisphenol in which at least 25% of the bisphenol units in the polymer chain are tetrahalogenated with chlorine or bromine.

2. Process according to Claim 1, **characterized in that** two or more membrane separation stages are provided.

3. Process according to Claim 1, **characterized in that** three membrane separation stages are provided, the retentate of the first membrane separation stage is fed to the second membrane separation stage in order to produce from the second membrane separation stage as retentate a mixture having a high SF₆ content, and the permeate of the first membrane stage is introduced into the third membrane stage and the permeate of the second membrane separation stage and the retentate of the third stage are recycled into the feed stream of the first membrane stage and the permeate of the third stage can be discharged into the environment.

4. Process according to Claim 1, **characterized in that** the process is employed during the use of the gas-insulated line for purifying the insulating gas mixture of SF₆ and N₂ or is employed for the purpose of reprocessing after use of the gas-insulated line has been terminated.

5. System comprising a gas-insulated line, a membrane separation device and one or more connection lines between the gas-insulated line and the membrane separation device, usable as a mobile membrane separation device.

## Revendications

1. Procédé de séparation de mélanges SF₆/N₂ en utilisant des membranes appropriées pour la séparation de SF₆, **caractérisé en ce que** l'on sépare dans une unité de séparation à membrane mobile, dont les membranes sont constituées d'une matrice polymère à base de polycarbonate dérivé d'un bisphénol dans lequel au moins 25 % des motifs bisphénol de la chaîne polymère sont tétrahalogénés avec du chlore ou du brome, des mélanges de SF₆/N₂ provenant de conduites à isolation gazeuse présentant une teneur en SF₆ de 5 à 50 % en volume avec une pression d'entrée de membrane de 10 à 13 bars.

2. Procédé selon la revendication 1, **caractérisé en ce que** l'on prévoit deux étages de séparation par membrane ou davantage.

3. Procédé selon la revendication 1, **caractérisé en ce que** l'on prévoit trois étages de séparation par membrane, le rétentat du premier étage de séparation par membrane alimentant le second étage de séparation par membrane, pour obtenir comme rétentat en sortie du second étage de séparation par membrane un mélange présentant une teneur en SF₆ élevée, et **en ce que** l'on dirige le perméat du premier étage de séparation par membrane vers le troisième étage de membrane, et **en ce que** l'on recycle le perméat du second étage de séparation par membrane et le rétentat du troisième étage dans le flux d'alimentation du premier étage de membrane, et **en ce que** le perméat du troisième étage peut être évacué dans l'environnement.

4. Procédé selon la revendication 1, **caractérisé en ce que** le procédé est appliqué pendant l'utilisation de la conduite à isolation gazeuse en vue de purifier le mélange de gaz isolant de SF₆ et N₂ ou à la fin de l'utilisation de la conduite à isolation gazeuse à des fins de revalorisation.

5. Système comprenant une conduite à isolation gazeuse, un dispositif de séparation à membrane et une ou plusieurs conduites de raccordement entre la conduite à isolation gazeuse et le dispositif de séparation à membrane, pouvant être utilisé en tant que dispositif mobile de séparation à membrane.
